# EUROPÄISCHE PATENTSCHRIFT

(11) **EP 0 617 177 B1**
(45) Veröffentlichungstag und Bekanntmachung des Hinweises auf die Patenterteilung: **18.09.1996**
(21) Anmeldenummer: 94103079.3
(22) Anmeldetag: 02.03.1994
(51) Int. Cl.: E04B 1/30, E04F 15/22, E04C 2/24, F16L 59/02, B32B 5/16

(54) **Plattenförmiges wärmedämmendes und Schwingungen dämpfendes Bauelement und Verfahren zu dessen Herstellung**
Slablike heat insulating and vibration damping building element and procedure to make same
Element de construction en forme de panneau isolant thermiquement et amortissant les vibrations ainsi que son procédé de fabrication

(30) Priorität: 10.03.1993 DE 4307522
(43) Veröffentlichungstag der Anmeldung: 28.09.1994
(73) Patentinhaber: Plack, Ludwig, 35216 Biedenkopf (DE)
(72) Erfinder: Plack, Ludwig, 35216 Biedenkopf (DE)
(74) Vertreter: Thielmann, Paul, Dipl.-Landw.

(56) Entgegenhaltungen:
- EP-A- 0 009 053
- EP-A- 0 082 295
- DE-C- 843 892
- US-A- 4 300 322
- US-A- 4 301 198

## Beschreibung

Die Erfindung betrifft ein plattenförmiges wärmedämmendes und Schwingungen dämpfendes Bauelement, welches eine Hohlräume enthaltende, die Wärmedämmung und Schwingungsdämpfung bewirkende Kernschicht und wenigstens eine die Kernschicht schützende mechanisch stärker belastbare Deckschicht aufweist, wobei die Kernschicht angeschmolzene Teile aus thermoplastischem Kunststoff enthält.
Die Erfindung betrifft ferner ein Verfahren zur Herstellung eines solchen Bauelementes.

Wärmedämmende und Schwingungen dämpfende Bauelemente mit diesen Merkmalen sind seit langem im Verkehr und allgemein in verschiedenen Ausführungsformen bekannt. Darunter sind solche in Plattenform, wobei ein wärmedämmender Plattenkern aus senkrecht zur Plattenebene gerichteten Kunststoffzellen in Form feiner Röhrchen besteht und von zwei Deckschichten aus glasfaserarmiertem Kunstharz eingeschlossen ist. Dabei sind die Kunststoffzellen des Plattenkerns durch Wärmebehandlung wenigstens teilweise miteinander verschmolzen worden. Solche Platten sind unter dem Warenzeichen DEKAPHAN in Verkehr gebracht worden. Sie haben jedoch keine wirtschaftliche Bedeutung erlangt. Sie sind sehr teuer, weil sie vollständig aus hochwertigem Material bestehen und weil ihre Herstellung verfahrenstechnisch sehr aufwendig und mit einem hohen Anteil an manueller Arbeit auch sehr teuer ist.

Es sind auch plattenförmige Bauelemente mit den wesentlichen eingangs beschriebenen Gattungsmerkmalen offenkundig geworden, wobei wenigstens die wärmedämmende Kernschicht aus leichtem Karton oder dergleichen Papiermaterial in einer wellpappenartigen Konstruktion besteht. Die Hohlräume werden hierbei von Zellen mit senkrecht zur Plattenebene gerichteten Zellwänden aus gewellten und miteinander verklebten Karton- oder Papierstreifen gebildet.
Auch diese Bauelemente sind nur aus glattem Papier- oder Kartonmaterial herstellbar und daher teuer. Sie haben ebenfalls keine bemerkenswerte Verbreitung gefunden.

Der Erfindung liegt die Aufgabe zugrunde, ein mehrschichtiges wärmedämmendes und Schwingungen dämpfendes Bauelement insbesondere in Plattenform zu schaffen, welches durch vorwiegende Verwendung von gebrauchtem Verpackungsmaterial billig hinsichtlich der Materialkosten ist. Es soll in mancherlei Gestalt formbar und weitgehend formstabil sein.

Zur Aufgabenstellung gehört auch die Entwicklung eines Verfahrens, wonach solche Bauelemente billig hergestellt werden können.

Die das Bauelement betreffende Aufgabe wird erfindungsgemäß dadurch gelöst, daß es die Merkmale gemäß Anspruch 1 aufweist.
Weitere Merkmale und alternative Lösungsmerkmale eines solchen Bauelementes gehen aus den Ansprüchen 2 bis 8 hervor.

Die das Verfahren betreffende Aufgabe wird erfindungsgemäß gelöst durch ein in den Ansprüchen 9 und 10 definiertes Verfahren.

Soweit die Erfindung das Bauelement betrifft, wird sie anhand einer das Bauelement in teilweise schematisierter Darstellung wiedergebenden Zeichnung näher erläutert.

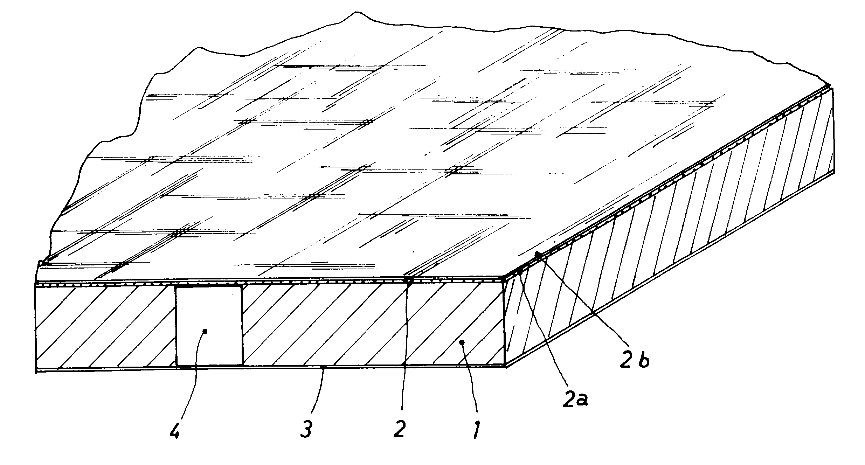

Das in der Zeichnung dargestellte Ausführungsbeispiel der Erfindung ist eine Platte mit einer Kernschicht **1** und zwei diese beidseitig bekleidenden Deckschichten **2, 3**. Die Kernschicht **1** besteht aus gebrauchtem Verpackungs-material wie Papier, Karton, Wellpappe sowie Folien und dünnwandige Behälter aus thermoplastischem Kunststoff. Dieses Füllmaterial besteht aus etwa zwei Teilen Papier-, Karton- und Wellpappenteilchen und einem Teil Kunststoffteilchen, die miteinander vermischt sind. Die Materialteilchen liegen unregelmäßig gekrümmt und teilweise gewendelt in einer gewünschten Verdichtung aneinander und sind durch von den Kunststoffbestandteilen ausgehenden Schmelzverklebungen miteinander fest verbunden.

Die zwischen den Teilchen des Füllmaterials vorhandenen Hohlräume bewirken in Verbindung mit der geringen Wärmeleitfähigkeit der das Füllmaterial bildenden Stoffe eine sehr gute Wärmedämmung. Bei der völlig unregelmäßigen Lage der Teilchen in der Kernschicht **1** bewirken die senkrecht und annähernd senkrecht zur Plattenebene gerichteten Papier-, Karton- und Wellpappenteilchen eine hohe Druckfestigkeit.

Die Druckfestigkeit ist besonders hoch bei solchen Platten nach der Erfindung, die auf beiden Seiten der Kernschicht **1** je eine feste Deckschicht **2, 3** haben.
Bei dem in der Zeichnung dargestellten Ausführungsbeispiel ist die eine Deckschicht **2** zweischichtig ausgebildet, wobei die innere Schicht von einem hoch-reiß-festen Gittergewebe **2a** aus Polyester gebildet ist. Dieses verleiht der Platte eine große Bruchfestigkeit und schützt die Kernschicht **1** vor Beschädigungen durch punktuelle mechanische Belastungen. Über dem Gittergewebe **2a** ist eine Metallfolie **2b** als Feuchtigkeitssperre angeordnet.

Sowohl das Gittergewebe **2a**, als auch die Metallfolie **2b** dieser Deckschicht **2** sind durch Verklebung mit dem bei der Herstellung der Platte schmelzflüssig aus der Kernschicht ausgetretenen und durch das Gittergewebe **2a** gedrungenen thermoplastischen Kunstsstoff auf der Kernschicht **1** befestigt.

Die andere Plattenseite ist mit einer Deckschicht **3** aus starkem Papier bekleidet, die ebenfalls durch von den Kunststoffteilen der Kernschicht **1** ausgehende Schmelzverklebung mit der Kernschicht **1** verbunden ist.

Die erfindungsgemäßen Bauelemente, insbesondere in Plattenform, sind sehr vielseitig verwendbar. Die vorstehend beschriebene und in der Zeichnung dargestellte Ausführungsform ist z.B. geeignet als Dämmschicht unter schwimmendem Estrich im Hochbau.
Mit einer Deckschicht aus einem mineralischen Baustoff, z.B. Gips oder Faserzement, sind solche Platten als wärmedämmende, schwingungsdämpfende und feuerhemmende Wandverkleidung einsetzbar.

In Form von Zylinder-Halbschalen können damit Rohre mit einer wärmedämmenden und schwingungsdämpfenden Umhüllung versehen werden.

Die papier- und kartonartigen Bestandteile bilden in der Kernschicht bei geringer Wärmeleitfähigkeit ein Hohlräume umschließendes Stützgerüst. Die Kunststoffbestandteile mit ebenfalls geringer Wärmeleitfähigkeit tragen einerseits zur Zellenbildung und damit zur wärmedämmenden Wirkung der Kernschicht bei. Andererseits bilden sie dadurch, daß sie vorübergehend schmelzbar sind, das notwendige Bindemittel, welches die Struktur der Kernschicht fixiert.

Die erfindungsgemäßen Bauteile sind besonders deshalb vorteilhaft, weil mit ihrer Herstellung häufig zusammen anfallendes gebrauchtes Verpackungsmaterial aus verschiedenen Papier- und Kartonarten sowie Folien und dünnwandige Behälter aus thermoplastischem Kunststoff zusammen einer Wiederverwertung in hochwertigen Erzeugnissen zugeführt werden.

Nach dem in den Ansprüchen 9 und 10 beschriebenen Verfahren können solche plattenförmigen Bauelemente einfach und billig mittels einer handelsüblichen Tafelpresse mit beheizbaren Preßflächen hergestellt werden.

## Patentansprüche

1. Plattenförmiges wärmedämmendes und Schwingungen dämpfendes Bauelement, welches eine Hohlräume enthaltende, die Wärmedämmung und Schwingungsdämpfung bewirkende Kernschicht (**1**) und wenigstens eine die Kernschicht (**1**) schützende, mechanisch stärker belastbare Deckschicht (**2, 3**) aufweist, wobei die Kernschicht (**1**) angeschmolzene Teile aus thermoplastischem Kunststoff enthält,
**dadurch gekennzeichnet,**
daß die Kernschicht (**1**) aus streifenförmig-stückig zerkleinertem und vermischtem Füllmaterial aus papierartigen Stoffen und dünnschichtigen thermoplastischen Kunststoffen besteht, wobei die Bestandteile des Füllmaterials durch eine von den Kunststoffbestandteilen ausgehende Schmelzverklebung miteinander und mit den Deckschichten (**2, 3**) fest verbunden sind.

2. Bauelement nach Anspruch 1,
**dadurch gekennzeichnet,**
daß es als Platte mit zwei die Kernschicht (**1**) beidseitig bedeckenden Deckschichten (**2, 3**) ausgebildet ist.

3. Bauelement nach einem der Ansprüche 1 oder 2,
**dadurch gekennzeichnet,**
daß die Kernschicht (**1**) aus gebrauchtem Verpackungsmaterial in Form von 5 bis 10 mm breiten Streifen oder Stückchen aus Papier, Karton, Wellpappe sowie Folien und dünnwandigen Behältern aus thermoplastischen Kunststoffen mit annähernd gleicher Schmelztemperatur besteht, wobei die Bestandteile der Kernschicht (**1**) jeweils unregelmäßig gekrümmt und wenigstens teilweise gewendelt unregelmäßig zueinander angeordnet durch von den Kunststoffbestandteilen ausgehende Schmelzverklebung miteinander verbunden sind.

4. Bauelement nach einem der Ansprüche 1 bis 3,
**dadurch gekennzeichnet,**
daß es wenigstens in einer der Deckschichten (**2, 3**) eine gitterartige Armierungseinlage (**2a**) aus hochzugfestem Material enthält.

5. Bauelement nach einem der Ansprüche 1 bis 4,
dadurch gekennzeichnet,
daß wenigstens eine eine der Deckschichten (**2, 3**) eine als Feuchtigkeitssperre dienende Schicht aus feuchtigkeitsdichtem Material enthält.

6. Bauelement nach einem der Ansprüche 1 bis 5,
**dadurch gekennzeichnet,**
daß wenigstens eine der Deckschichten (**2, 3**) eine feuerhemmende Schicht aus einem mineralischen Baustoff enthält.

7. Bauelement nach einem der Ansprüche 1 bis 6,
**dadurch gekennzeichnet,**
daß die Kernschicht (**1**) Distanzeinlagen (**4**) enthält, auf denen sich die Deckschichten (**2, 3**) abstützen.

8. Bauelement nach einem der Ansprüche 1 bis 7,
**dadurch gekennzeichnet,**
daß es als Zylinder-Halbschale ausgebildet ist.

9. Verfahren zur Herstellung eines Bauelementes nach den Ansprüchen 1 bis 3,
**dadurch gekennzeichnet,** daß man
- als Füllmaterial für die Kernschicht (**1**) gebrauchtes Verpackungsmaterial aus papierartigen Stoffen sowie aus Folien und dünnwandigen Behältern aus thermoplastischen Kunststoffen mit annähernd gleicher Schmelztemperatur streifig-stückig zerkleinert,
- den zerkleinerten Füllstoff im gewünschten Mengenverhältnis von papierartigem Material und Kunststoffen miteinander vermischt, so daß die Materialteile unregelmäßig gekrümmt und wenigstens teilweise gewendelt in der Mischung vorliegen,
- auf die untere Innenfläche einer beheizbaren Preßform das eine Deckschicht (**3**) des Bauelementes bildende Material legt, darauf den Füllstoff für die Kernschicht (**1**) ausbreitet, diesen mit einer weiteren Deckschicht (**2**) oder einer dünneren, nicht mit der erwärmten Formwand verklebbaren Abdeckung belegt und
- die gesamte Formfüllung bis zu Erreichung der gewünschten Struktur der Kernschicht (**1**) durch Zusammenfahren der Form verdichtet bei gleichzeitiger Erwärmung durch die Formwände bis zur Erreichung der Schmelztemperatur der Kunststoffbestandteile der Kernschicht (**1**), danach bis zum Wiedererstarren derselben abkühlen läßt und aus der Form nimmt.

10. Verfahren nach Anspruch 9,
**dadurch gekennzeichnet,**
daß der Füllstoff für die Kernschicht (**1**) vor dem Beschicken der Form in aufgelockertem Zustand bis zum Erweichen, jedoch nicht bis zur Erreichung der Schmelztemperatur der Kunststoffbestandteile vorgewärmt wird.

## Claims

1. Board-like heat-insulating and vibration-damping structural element which has a core layer (1), containing cavities and bringing about heat insulation and vibration damping, and at least one covering layer (2, 3) which protects the core layer (1) and which can be subjected to relatively high mechanical loads, the core layer (1) containing fused-on thermoplastic particles, characterized in that the core layer (1) consists of mixed filling material comminuted into strip-like pieces and composed of paper-like substances and of thin-layered thermoplastics, the constituents of the filling material being fixedly connected to one another and to the covering layers (2, 3) by means of fusion bonding originating from the plastic constituents.

2. Structural element according to Claim 1, characterized in that it is designed as a board with two covering layers (2, 3) which cover the core layer (1) on both sides.

3. Structural element according to one of Claims 1 or 2, characterized in that the core layer (1) consists of used packaging material in the form of 5 to 10 mm wide strips or small pieces of paper, card, corrugated card as well as films and thin-walled thermoplastic containers having approximately the same fusion temperature, the constituents of the core layer (1), in each case arranged in an irregularly bent and at least partially coiled manner irregularly relative to one another, being connected to one another by fusion bonding originating from the plastic constituents.

4. Structural element according to one of Claims 1 to 3, characterized in that it contains, at least in one of the covering layers (2, 3), a mesh-like reinforcing interlining (2a) composed of material of high tensile strength.

5. Structural element according to one of Claims 1 to 4, characterized in that at least one of the covering layers (2, 3) contains a layer of moisture-proof material serving as moisture barrier.

6. Structural element according to one of Claims 1 to 5, characterized in that at least one of the covering layers (2, 3) contains a fire-retarding layer composed of a mineral building material.

7. Structural element according to one of Claims 1 to 6, characterized in that the core layer (1) contains spacer inserts (4), on which the covering layers (2, 3) are supported.

8. Structural element according to one of Claims 1 to 7, characterized in that it is designed as a cylinder half-shell.

9. Method for producing a structural element according to Claims 1 to 3, characterized in that
- used packaging material consisting of paper-like substances and of films and thin-walled thermoplastic containers having approximately the same fusion temperature are comminuted into strip-like pieces as filling material for the core layer (1),
- the comminuted filling material is intermixed in the desired quantity ratio of paper-like material and plastics, so that the material particles are present in the mixture in an irregularly bent and at least partially coiled manner,
- the material forming a covering layer (3) of the structural element is laid onto the lower inner surface of a heatable press die, the filling material for the core layer (1) is spread on the said covering layer, and the said filling material is covered with a further covering layer (2) or with a thinner covering not bondable with the heated die wall, and
- the entire die filling is compacted by moving the die together, until the desired structure of the core layer (1) is obtained, with simultaneous heating by the die walls, until the fusion temperature of the plastic constituents of the core layer (1) is reached, and thereafter the core layer is allowed to cool until it solidifies again, and it is taken out of the die.

10. Method according to Claim 9, characterized in that, before the die is loaded, the filling material for the core layer (1) is preheated in the loosened state until it softens, but not until the fusion temperature of the plastic constituents is reached.

## Revendications

1. Elément de construction en forme de panneau isolant thermiquement et amortissant les vibrations, qui présente une couche interne (1) contenant des vides et provoquant l'isolation thermique et l'amortissement des vibrations et au moins une couche de recouvrement (2, 3), pouvant subir des sollicitations mécaniques plus élevées et protégeant la couche interne (1), dans lequel la couche interne (1) contient des parties fondues en matière plastique thermoplastique, caractérisé en ce que la couche interne (1) se compose de matière de remplissage en matériaux de type papier et de matières plastiques thermoplastiques en mince couche, réduites en morceaux en forme de bandelettes et mélangées, les composants de la matière de remplissage étant fermement assemblés l'un à l'autre et aux couches de recouvrement (2, 3) par un collage à fusion à partir des composants de matière plastique.

2. Elément de construction suivant la revendication 1, caractérisé en ce qu'il est formé en un panneau avec deux couches de recouvrement (2, 3) revêtant la couche interne (1) sur les deux côtés.

3. Elément de construction suivant l'une quelconque des revendications 1 ou 2, caractérisé en ce que la couche interne (1) se compose de matériaux d'emballage usagés sous la forme de bandelettes de 5 à 10 mm de largeur ou de petits morceaux de papier, carton, carton ondulé ainsi que feuilles et récipients à paroi mince en matières plastiques thermoplastiques ayant à peu près la même température de fusion, dans lequel les composants de la couche interne (1) irrégulièrement courbés et au moins en partie enroulés en hélice et disposés de façon irrégulière l'un par rapport à l'autre, sont assemblés l'un à l'autre par un collage à fusion à partir des composants de matière plastique.

4. Elément de construction suivant l'une quelconque des revendications 1 à 3, caractérisé en ce qu'il contient, au moins dans une des couches de recouvrement (2, 3), un élément d'armature en forme de grille (2a) en une matière à haute résistance à la traction.

5. Elément de construction suivant l'une quelconque des revendications 1 à 4, caractérisé en ce qu'au moins une des couches de recouvrement (2, 3) contient une couche en matière imperméable à l'humidité, servant de barrière contre l'humidité.

6. Elément de construction suivant l'une quelconque des revendications 1 à 5, caractérisé en ce qu'au moins une des couches de recouvrement (2, 3) contient une couche résistant au feu en un matériau de construction minéral.

7. Elément de construction suivant l'une quelconque des revendications 1 à 6, caractérisé en ce que la couche interne (1) contient des éléments d'écartement (4), sur lesquels s'appuient les couches de recouvrement (2, 3).

8. Elément de construction suivant l'une quelconque des revendications 1 à 7, caractérisé en ce qu'il est formé en une demi-coquille cylindrique.

9. Procédé pour la fabrication d'un élément de construction suivant les revendications 1 à 3, caractérisé en ce que
- comme matière de remplissage pour la couche interne (1), on réduit en bandelettes et en morceaux des matériaux d'emballage usagés en matières de type papier ainsi qu'en feuilles et récipients à paroi mince en matières plastiques thermoplastiques ayant à peu près la même température de fusion,
- on mélange la matière de remplissage réduite dans un mélange aux proportions désirées de matière de type papier et de matières plastiques, de telle façon que les parties de matières se retrouvent irrégulièrement courbées et au moins partiellement enroulées en hélice dans le mélange,
- on dépose sur le plateau intérieur inférieur d'une presse à plateaux chauffants la matière formant une couche de recouvrement (3) de l'élément de construction, on étend sur celle-ci la matière de remplissage pour la couche interne (1), et on couvre celle-ci avec une autre couche de recouvrement (2) ou avec un recouvrement plus mince, ne collant pas avec la paroi de moule chaude, et
- on comprime tout le remplissage du moule par fermeture du moule jusqu'à atteindre la structure désirée de la couche interne (1) avec un chauffage simultané à travers la paroi du moule jusqu'à atteindre la température de fusion des composants de matières plastiques de la couche interne (1), on laisse ensuite refroidir jusqu'à resolidification de celle-ci et on retire hors du moule.

10. Procédé suivant la revendication 9, caractérisé en ce que la matière de remplissage pour la couche interne (1) est préchauffée avant le chargement du moule à l'état desserré, jusqu'au ramollissement mais pas jusqu'à atteindre la température de fusion des composants de matières plastiques.
